Europäisches Patentamt

European Patent Office

Office européen des brevets

(19)

(11) Numéro de publication : **0 023 172
B1**

(12) **FASCICULE DE BREVET EUROPÉEN**

(45) Date de publication du fascicule du brevet :
**11.05.83**

(21) Numéro de dépôt : **80401010.6**

(22) Date de dépôt : **03.07.80**

(51) Int. Cl.³ : **F 16 K 47/04,** F 16 K 1/34,
F 01 D 17/14

(54) **Soupape anti-vibrations.**

(30) Priorité : **19.07.79 FR 7918671**

(43) Date de publication de la demande :
**28.01.81 Bulletin 81/04**

(45) Mention de la délivrance du brevet :
**11.05.83 Bulletin 83/19**

(84) Etats contractants désignés :
**DE FR NL SE**

(56) Documents cités :
**DE A 1 650 518
SU A 176 594
US A 2 289 239
US A 2 297 535
US A 2 732 172
US A 3 857 542**

(73) Titulaire : **CENTRE TECHNIQUE DES INDUSTRIES
MECANIQUES
52, avenue Félix-Louat B.P. 67
F-60304 Senlis Cedex (FR)**

(72) Inventeur : **Pluviose, Michel
Allée des Sorbiers
F-93140 Bondy (FR)**

(74) Mandataire : **Loriot, Jacques
c/o SA. FEDIT-LORIOT 38, avenue Hoche
F-75008 Paris (FR)**

Jouve, 18, rue St-Denis, 75001 Paris, France

## Soupape anti-vibrations

La présente invention concerne les soupapes et, plus particulièrement, les soupapes de réglage de turbine et notamment de turbine à vapeur.

On connaît des soupapes de réglage des turbines, comportant un clapet à tête sphérique qui obture plus ou moins le passage du fluide vers une tuyère de récupération. Cette tuyère a pour but de récupérer au maximum l'énergie cinétique du fluide en la transformant en énergie piézométrique de façon que le rendement global de l'installation ne soit pas trop affecté par la soupape lors du fonctionnement aux grandes ouvertures du passage. Le clapet est disposé dans une chambre en général alimentée latéralement, et ses déplacements dans l'axe de la sortie du fluide à l'encontre du rétrécissement du passage formant siège, sont commandés par un système de régulation.

Les écoulements rapides et notamment supersoniques, à travers une soupape du type précité donnent lieu à des vibrations mécaniques dangereuses pour l'ensemble de l'installation, des instabilités d'écoulement qui perturbent le système de régulation, des pertes de charge anormales et des bruits exagérés.

On a constaté en particulier, qu'aux très faibles levées du clapet et aux levées intermédiaires, une onde de choc de recompression se produit entre le clapet et le siège.

Les écoulements instationnaires semblent dus à un collage des jets de fluide à la paroi du clapet, collage qui se fait de façon désordonnée et qui résulte des courbures proposées au fluide par les parois. On a aussi observé une dissymétrie de l'écoulement du fluide autour du clapet, le régime pouvant être supersonique dans une zone et subsonique dans une autre, d'où des efforts transversaux très importants sur le clapet et la formation d'un écoulement rotatif.

Ces écoulements instationnaires provoquent des efforts non seulement sur le clapet mais également sur tous les éléments disposés en aval et principalement le premier étage de la turbine où des variations de débit global peuvent apparaître.

Le US-A-2.289.239 a proposé une soupape anti-vibration comprenant un corps de soupape délimitant un passage où le fluide arrive dans une chambre renfermant un clapet manœuvrable à volonté en translation, dans l'axe de la sortie du fluide, à l'encontre d'un rétrécissement de ce passage formant siège pour le clapet afin de régler le passage du fluide. Dans toutes les positions du clapet entre la fermeture complète et l'ouverture totale, les sections de passage du fluide entre le clapet et son siège sont décroissantes d'amont en aval. Le clapet présente un décrochement de surface au voisinage aval de la zone de contact du clapet avec le siège. Ces caractéristiques particulières apportent des améliorations aux soupapes antérieurement connues mais qui ne sont cependant pas suffisantes notamment dans le cas d'utilisation dans des conditions sévères telles celles que l'on rencontre dans l'application aux turbines à vapeur.

La présente invention a pour but de remédier aux inconvénients précités et d'améliorer ainsi les soupapes de réglage en général et les soupapes de réglage des turbines en particulier.

La présente invention a pour objet une soupape anti-vibrations de réglage de passage de fluide, qui comprend un corps de soupape délimitant un passage où le fluide arrive dans une chambre renfermant un clapet manœuvrable à volonté en translation, dans l'axe de la sortie dudit fluide, à l'encontre d'un rétrécissement dudit passage formant siège pour ledit clapet, afin de régler le passage dudit fluide ; dans toutes les positions dudit clapet entre la fermeture complète et l'ouverture totale, les sections de passage du fluide entre ledit clapet et son siège étant décroissantes d'amont en aval, ledit siège étant suivi par une partie de corps de soupape sous forme d'une tuyère divergente présentant un col, ledit clapet présentant un décrochement de surface au voisinage aval de la zone de contact dudit clapet avec ledit siège, ladite soupape étant caractérisée en ce que ledit siège étant constitué par une pièce distincte disposée en amont du col de la tuyère divergente, et que la paroi du siège du clapet étant délimitée en coupe axiale par au moins une courbe à laquelle est raccordé un segment de droite au voisinage aval du point de contact de ladite courbe avec ledit clapet, la paroi dudit siège présentant une discontinuité, avec formation d'une arête, au niveau du point de raccordement de ladite courbe et dudit segment de droite.

Le décrochement de surface au voisinage aval de la zone de contact du clapet avec le siège permet d'éviter un collage massif du fluide à la paroi aval du clapet, comme ce serait le cas avec un clapet à tête sphérique. On évite ainsi un écoulement en forme de tuyère convergente-divergente entre le clapet et le siège et on supprime toute possibilité de recompression sur le clapet. De même, la discontinuité de la paroi du siège avec formation d'une arête améliore l'écoulement en assurant un jet franc.

Suivant l'invention, la paroi du siège du clapet peut être délimitée en coupe axiale par au moins une courbe convexe à laquelle est raccordé un segment de droite formant un angle d'au moins 90° avec une perpendiculaire à l'axe du clapet issue du point de raccordement, ledit angle étant supérieur à l'angle formé par ladite perpendiculaire avec la tangente à ladite courbe audit point de raccordement.

Suivant un mode de réalisation de l'invention, en coupe axiale, la paroi du clapet dans la zone de contact avec le siège est déterminée par au moins une première courbe convexe à laquelle est raccordée une seconde courbe au voisinage aval d'un point de contact de ladite première courbe avec le siège du clapet, lesdites première et seconde courbes étant entièrement situées en amont de la perpendiculaire à l'axe du clapet issue du point de raccordement desdites courbes.

Il est à noter que, dans le cadre de la présente invention, l'expression « voisinage aval du point de contact » signifie que la distance entre le point de raccordement des courbes et le point de contact avec le siège est très petite par rapport aux dimensions du clapet. A titre d'exemple, pour un clapet ayant environ 300 mm de diamètre, le point de raccordement est à environ 1 mm du point de contact. Ceci permet d'assurer l'existence d'une arête vive au niveau du point de raccordement.

Suivant un mode de réalisation de l'invention, la seconde courbe est la génératrice d'un évidement axial sphérique du clapet.

Suivant un autre mode de réalisation de l'invention, la seconde courbe est un segment de droite qui forme avec la perpendiculaire, à l'axe du clapet, issue du point de raccordement dudit segment à la première courbe, un angle supérieur à 0° et au plus égal à 90°, ledit segment de droite étant alors la génératrice d'un évidement axial du clapet, cylindrique ou conique.

Suivant un mode de réalisation avantageux, la tangente à la première courbe au point de raccordement forme avec la perpendiculaire à l'axe du clapet issue du point de raccordement, un angle supérieur à 0° et inférieur à 90°.

Suivant un autre mode de réalisation, la paroi du siège du clapet présente également un décrochement de surface au voisinage aval de la zone de contact avec le clapet.

L'invention sera mieux comprise à la lecture de la description détaillée qui suit et à l'examen des dessins annexés qui représentent, à titre d'exemples non limitatifs, plusieurs modes de réalisation de l'invention.

La figure 1 représente une coupe axiale d'une soupape suivant l'invention.

La figure 2 représente, à plus grande échelle, une partie de la soupape de la figure 1.

Les figures 3 à 5 représentent des variantes d'un clapet de soupape suivant l'invention.

La figure 6 représente schématiquement un autre mode de réalisation de l'invention.

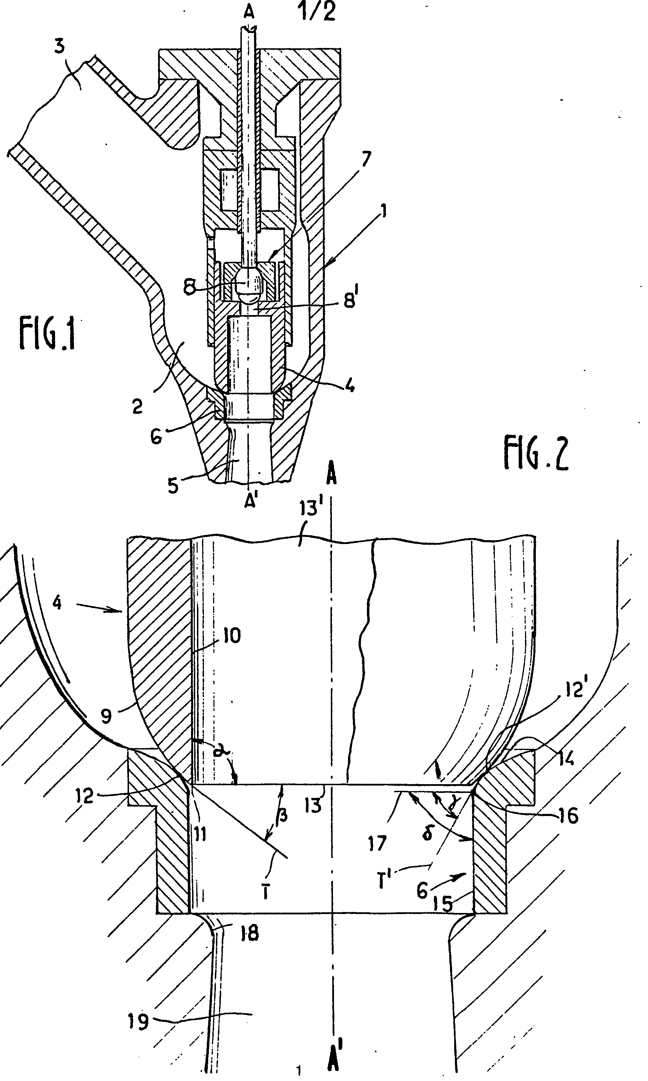

Sur la figure 1, on a représenté une soupape de réglage d'une turbine à vapeur. Cette soupape comporte un corps de soupape 1, une chambre 2, alimentée latéralement par un conduit 3 et un clapet 4 qui peut obturer plus ou moins le passage du fluide vers une tuyère de récupération 5. Le clapet 4 est manœuvrable en translation dans l'axe de sortie A-A' du fluide à l'encontre d'un rétrécissement formant un siège·constitué par une pièce rapportée 6. De façon connue, la soupape représentée comporte une soupape intermédiaire 7 avec un clapet 8 plus petit que le clapet 4, et qui commande l'écoulement du fluide dans un passage axial 8' dans le clapet 4. L'ouverture dans un premier temps du clapet 8 permet de réduire l'effort nécessaire pour l'ouverture du clapet 4.

On voit sur la figure 2, qu'en coupe axiale, la paroi du clapet 4 dans la zone de contact avec le siège 6, est délimitée dans l'exemple par une courbe convexe telle qu'un arc-de-cercle 9 auquel est raccordé un segment de droite 10 en un point 11 situé au voisinage aval d'un point de contact 12 de l'arc-de-cercle 9 avec le siège 6. L'arc-de-cercle 9 et le segment de droite 10 sont entièrement situés en amont de la perpendiculaire 13 à l'axe AA' issue du point de raccordement 11. Le segment 10 forme un angle $\alpha$ de 90° avec la perpendiculaire 13 à l'axe AA', tandis que la tangente T à l'arc-de-cercle 9 au point de raccordement 11 forme, avec la perpendiculaire 13, un angle $\beta$ égal à environ 45°. Le clapet 4 présente donc dans la zone de contact avec le siège une surface sphérique convexe avec un décrochement résultant d'un évidement axial cylindrique 13' dudit clapet 4.

On notera que, sur les figures, la distance entre le point de contact 12 et le point de raccordement 11 est exagérée pour des raisons de clarté.

En coupe axiale, la paroi du siège 6 est délimitée par une courbe convexe telle qu'un arc-de-cercle 14 auquel est raccordé un segment de. droite 15 en un point 16 situé au voisinage aval du point de contact 12' de l'arc-de-cercle 14 avec le clapet 4. L'arc-de-cercle 14 est situé en amont de la perpendiculaire 17 à l'axe AA' issue du point de raccordement 16, tandis que le segment de droite 15 est situé en aval de la perpendiculaire 17. La tangente T' à l'arc-de-cercle 14 au point de raccordement 16 forme un angle $\gamma$ d'environ 45° avec la perpendiculaire 17, tandis que le segment de droite 15 forme un angle $\delta$ de 90° avec la perpendiculaire 17. Le siège présente donc une surface torique qui se prolonge vers l'aval par une surface cylindrique. L'angle $\delta$ étant supérieur à l'angle $\gamma$, la paroi du siège 6 présente une discontinuité avec formation d'une arête en 16.

Dans le mode de réalisation des figures 1 et 2, le siège 6 du clapet 4 est suivi vers l'aval d'un rétrécissement formant un col 18 de tuyère divergente 19.

Pour obtenir un décrochement de surface au voisinage aval du point de contact du clapet avec le siège, il suffit que l'angle $\alpha$, représenté sur la figure 2 entre le segment de droite 10 et la perpendiculaire 13 au point de raccordement 11, soit supérieur à 0°, sa valeur maximum préférée étant égale à 90°.

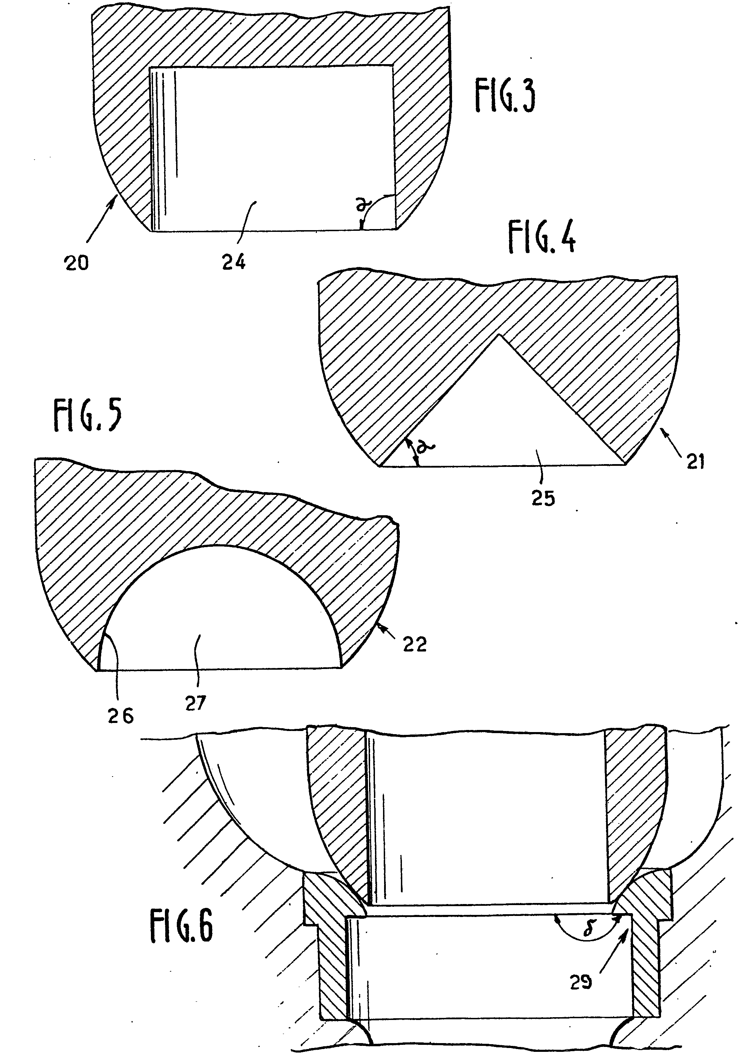

Sur les figures 3 à 5, on a représenté d'autres modes de réalisation d'un clapet suivant l'invention. Ces clapets 20, 21 et 22 sont destinés à des soupapes à commande directe, c'est-à-dire ne comportant pas une soupape intermédiaire ni, par conséquent, un passage axial pour le fluide tel que le passage 8' de la figure 1.

La figure 3 correspond au cas où l'angle $\alpha$ vaut 90° et le clapet présente donc un évidement axial cylindrique borgne 24.

La figure 4 correspond à un angle $\alpha$ supérieur à 0° et inférieur à 90°, le clapet 21 présentant donc un évidement axial conique 25.

La figure 5 correspond au cas où le segment de droite 10, représenté sur la figure 2, est remplacé par un arc-de-cercle 26, le clapet 22 présentant un évidement axial sphérique 27.

La paroi du siège du clapet peut également présenter un décrochement de surface au voisinage aval du point de contact avec ledit clapet. Ce décrochement de surface est obtenu dès que la valeur de l'angle δ (représenté sur la figure 2) entre la perpendiculaire 17 et le segment de droite 15 est supérieur à 90°. Sur la figure 6, on a représenté un mode de réalisation dans lequel un décrochement 29 de la paroi du siège est défini par un angle δ égal à 180 °C.

Bien entendu, l'invention n'est nullement limitée aux modes de réalisation décrits et représentés, elle est susceptible de nombreuses variantes accessibles à l'homme de l'art, suivant les applications envisagées et sans s'écarter pour cela de l'esprit de l'invention.

C'est ainsi, en particulier, que l'invention ne se limite pas aux écoulements supersoniques dans les soupapes de réglage de turbine à vapeur, elle est applicable à toutes les soupapes ou robinets traversés par un fluide compressible ou non.

## Revendications

1. Soupape anti-vibrations de réglage de passage de fluide, qui comprend un corps (1) de soupape délimitant un passage où le fluide arrive dans une chambre (2) renfermant un clapet (4 ; 20 ; 21 ; 22) manœuvrable à volonté en translation, dans l'axe de la sortie dudit fluide, à l'encontre d'un rétrécissement dudit passage formant siège (6) pour ledit clapet (4), afin de régler le passage dudit fluide ; dans toutes les positions dudit clapet (4) entre la fermeture complète et l'ouverture totale, les sections de passage du fluide entre ledit clapet (4) et son siège (6) étant décroissantes d'amont en aval, ledit siège (6) étant suivi par une partie de corps de soupape sous forme d'une tuyère divergente (19) présentant un col (18), ledit clapet (4) présentant un décrochement de surface (11) au voisinage aval de la zone de contact (12) dudit clapet avec ledit siège, ladite soupape étant caractérisée en ce que ledit siège (6) est constitué par une pièce distincte disposée en amont du col (18) de la tuyère divergente (19), et que la paroi du siège (6) du clapet est délimitée en coupe axiale par au moins une courbe (14) à laquelle est raccordé un segment de droite (15) au voisinage aval du point de contact (12') de ladite courbe (14) avec ledit clapet (4), la paroi dudit siège (6) présentant une discontinuité, avec formation d'une arête, au niveau du point de raccordement (16) de ladite courbe (14) et dudit segment de droite (15).

2. Soupape suivant la revendication 1, caractérisée en ce que la paroi du siège (6) du clapet est délimitée en coupe axiale par au moins une courbe convexe (14) à laquelle est raccordé un segment de droite (15) formant un angle d'au moins 90° avec une perpendiculaire (17) à l'axe du clapet issue du point de raccordement (16), ledit angle (δ) étant supérieur à l'angle (γ) formé par ladite perpendiculaire (17) avec la tangente (T') à ladite courbe (14) audit point de raccordement (16).

3. Soupape suivant l'une quelconque des revendications 1 ou 2, caractérisée en ce que la paroi du siège (6) du clapet présente un décrochement de surface (29) au voisinage aval de la zone de contact (12') avec le clapet (4).

4. Soupape suivant l'une quelconque des revendications 1 à 3, caractérisée en ce qu'en coupe axiale la paroi du clapet (4), dans la zone de contact (12') avec le siège, est délimitée par au moins une première courbe, convexe (9) à laquelle est raccordée une seconde courbe (10) au voisinage aval d'un point de contact (12') de ladite première courbe (9) avec le siège (6) du clapet, lesdites première (9) et seconde (10) courbes étant entièrement situées en amont de la perpendiculaire (13) à l'axe du clapet issue du point de raccordement (11) desdites courbes (9, 10).

5. Soupape suivant la revendication 4, caractérisée en ce que la tangente (T) à la première courbe (9) au point de raccordement (11) avec la seconde courbe (10) forme avec la perpendiculaire (13) à l'axe du clapet issue dudit point de raccordement (11) un angle (β) supérieur à 0° et inférieur à 90°.

6. Soupape suivant l'une quelconque des revendications 4 ou 5, caractérisée en ce que la seconde courbe (10) est la génératrice d'un évidement sphérique axial (26) dudit clapet.

7. Soupape suivant l'une des revendications 4 ou 5, caractérisée en ce que la seconde courbe (10) est un segment de droite (10) qui forme avec la perpendiculaire (13) à l'axe du clapet issue du point (11) de raccordement dudit segment (10) à la première courbe un angle (α) supérieur à 0° et au plus égal à 90°.

8. Soupape suivant la revendication 7, caractérisée en ce que le segment de droite (10) précité est une génératrice d'un évidement axial conique (25) du clapet.

9. Soupape suivant la revendication 7, caractérisée en ce que le segment de droite (10) précité est une génératrice d'un évidement cylindrique (24) du clapet.

## Claims

1. Anti-vibration valve for control of passage of fluid, comprising, a valve body (1) defining a passage through which fluid flows into a chamber (2) containing a valve member (4 ; 20 ; 21 ; 22) movable as desired along the output axis of said fluid against a narrowing in said passage forming a seat (6) for said valve member (4) in order to control the passage of said fluid ; in all the positions of said valve member (4) between complete closure and full opening, the cross-sections of the fluid passage between said valve member (4) and its seat (6) decreasing from upstream to downstream, said seat (6) being followed by a part of the valve body in the form of a diverging nozzle (19) having a neck (18), said valve member (4) having a surface interruption (11) in the region downstream of the area of contact (12) of said valve member with said seat, said valve being characterised in that said seat (6) is constituted by a separate element disposed upstream of the neck (18) of the diverging nozzle (19), and that the wall of the seat (6) of the valve member is defined in axial section by at least one curve (14) to which there is joined a straight portion (15) in the region downstream of the point of contact (12') of said curve (14) with said valve member (4), the wall of said seat (6) having a discontinuity, with the formation of a stop, at the level of the point of joining (16) of said curve (14) with said straight portion (15).

2. Valve according to claim 1, characterised in that the wall of the seat (6) of the valve member is defined in axial section by at least one convex curve (14) to which there is joined a straight portion (15) forming an angle of at least 90° with a perpendicular (17) to the axis of the valve member through the point of joining (16), said angle (δ) being greater than the angle (γ) formed by said perpendicular (17) with the tangent (T') to said curve (14) at said point of joining (16).

3. Valve according to any one of claims 1 or 2, characterised in that the wall of the seat (6) of the valve member has a surface interruption (29) in the region downstream of the area of contact (12') with the valve member (4).

4. Valve according to any one of claims 1 to 3, characterised in that in axial section the wall of the valve member (4), in the area of contact (12') with the seat, is defined by at least a first convex curve (9) to which there is joined a second curve (10) in the region downstream of a point of contact (12') of said first curve (9) with the seat (6) of the valve member, said first (9) and second (10) curves being entirely located upstream of the perpendicular (13) to the axis of the valve member through the point of joining (11) of said curves (9, 10).

5. Valve according to claim 4, characterised in that the tangent (T') to the first curve (9) at the point of joining (11) with the second curve (10) forms with the perpendicular (13) to the axis of the valve member through said point of joining (11) an angle (β) greater than 0° and less than 90°.

6. Valve according to any one of claims 4 or 5, characterised in that the second curve (10) is the generatrix of an axial spherical opening (26) in said valve member.

7. Valve according to one of claims 4 or 5, characterised in that the second curve (10) is a straight portion (10) which forms with the perpendicular (13) to the axis of the valve member through the point (11) of joining of said portion (10) to first curve an angle (γ) greater than 0° and at most equal to 90°.

8. Valve according to claim 7, characterised in that the said straight portion (10) is a generatrix of a conical axial opening (25) of the valve member.

9. Valve according to claim 7, characterised in that the said straight portion (10) is a generatrix of a cylindrical opening (24) in the valve member.

## Ansprüche

1. Ventil mit Schwingungsunterdrückung zum Einstellen eines Fluiddurchlasses, welches ein Ventilgehäuse (1) umfasst, das einen Durchgang umschließt, wo das Fluid in einer Kammer (2) ankommt, die ein Ventilstück (4, 20, 21, 22) einschließt, das frei in Richtung des Austritts des Fluids gegen eine Einschnürung, welche einen Sitz (6) für dieses Ventilstück (4) bildet, verstellbar ist, um den Fluiddurchgang einstellen zu können, wobei in allen Stellungen des Ventilstücks (4) zwischen dem vollständigen Verschließen und der vollständigen Freigabe die Abstände zwischen dem Ventilstück (4) und seinem Sitz (6) von stromaufwärts nach stromabwärts abnehmen, wobei nach dem Sitz (6) ein Teil des Ventilgehäuses als divergierende Düse (19) ausgebildet ist, die eine Verengung (18) aufweist und wobei das Ventilstück (4) stromabwärts im Bereich der Kontaktzone (12) des Ventilstücks mit diesem Sitz eine Stufe (11) aufweist, dadurch gekennzeichnet, daß der Sitz (6) durch ein getrenntes Teil gebildet wird, das stromaufwärts von der Verengung (18) der divergierenden Düse (19) angeordnet ist, und daß im Axialschnitt die Innenseite des Ventilstücks (6) begrenzt ist durch mindestens eine Krümmung (14), an welche sich ein gerader Abschnitt (15) im Bereich stromabwärts vom Kontaktpunkt (12') dieser Krümmung (14) mit diesem Ventilstück (4) anschließt, wobei diese Innenseite eine Diskontinuität unter Bildung einer Kante in Höhe des Verbindungspunkts (16) dieser Krümmung (14) und dieses geraden Abschnitts (15) aufweist.

2. Ventil nach Anspruch 1, dadurch gekennzeichnet, daß im Axialschnitt die Innenseite des Ventilstücksitzes (6) begrenzt ist durch mindestens eine konvexe Krümmung (14) an welche sich ein gerader Abschnitt (15) anschließt, der einen Winkel von mindestens 90° mit der senkrechten (17) zur Achse des Ventilstücks am Verbindungspunkt (16) bildet, wobei dieser Winkel (δ) größer ist als der Winkel (γ), den diese Senkrechte (17) mit der Tangente (T') an diese Krümmung (14) am Verbindungspunkt (16) bildet.

3. Ventil nach einem der Ansprüche 1 oder 2, dadurch gekennzeichnet, daß die Innenseite des Ventilstücksitzes (6) eine Stufe (29) im Bereich stromabwärts der Kontaktzone (12') mit dem Ventilstück (4) aufweist.

4. Ventil nach einem der Ansprüche 1 bis 3, dadurch gekennzeichnet, daß im Axialschnitt die Wand des Ventilstücks (4) in der Kontaktzone (12') mit dem Sitz begrenzt ist durch mindestens eine konvexe Krümmung (9), an welche sich im Bereich stromabwärts eines Kontaktpunktes (12') dieser ersten Krümmung (9) mit dem Ventilstücksitz (6) ein zweite Krümmung (10) anschließt, wobei diese erste und zweite Krümmung (9, 10) gänzlich stromaufwärts von der Senkrechten (13) zur Achse des Ventilstücks am Verbindungspunkt (11) dieser Krümmungen (9, 10) angeordnet sind.

5. Ventil nach Anspruch 4, dadurch gekennzeichnet, daß die Tangente (T) an die erste Krümmung (9) am Verbindungspunkt (11) mit der zweiten Krümmung (10) mit der Senkrechten (13) zur Ventilstückachse an diesen Verbindungspunkt (11) einen Winkel (β) von größer 0° und kleiner 90° bildet.

6. Ventil nach einem der Ansprüche 4 oder 5, dadurch gekennzeichnet, daß die zweite Krümmung (10) die Grenzlinie einer sphärischen axialen Ausnehmung (26) des Ventilstücks ist.

7. Ventil nach einem der Ansprüche 4 oder 5, dadurch gekennzeichnet, daß die zweite Krümmung (10) ein gerader Abschnitt (10) ist, der mit der Senkrechten (13) zur Achse des Ventilstücks am Verbindungspunkt 11 dieses Abschnitts mit der ersten Krümmung einen Winkel (α) größer 0° und höchstens gleich 90° bildet.

8. Ventil nach Anspruch 7, dadurch gekennzeichnet, daß der vorgenannte gerade Abschnitt (10) die Grenzlinie einer axialen konischen Ausnehmung (25) des Ventilstücks ist.

9. Ventil nach Anspruch 7, dadurch gekennzeichnet, daß der vorgenannte gerade Abschnitt (10) die Grenzlinie einer zylindrischen Ausnehmung (26) des Ventilstücks ist.

0 023 172

1/2

FIG.1

FIG.2

FIG.3

20    24

FIG.4

FIG.5

25    21

22

26    27

FIG.6

29